# EUROPEAN PATENT SPECIFICATION

(11) **EP 2 881 235 B1**
(45) Date of publication and mention of the grant of the patent: **08.02.2017**
(21) Application number: 14196402.3
(22) Date of filing: 04.12.2014
(51) Int. Cl.: B29C 51/12, B29C 51/16, B29K 105/00, B29L 31/30, B29C 51/08

(54) **Process for the manufacture of a trim piece by means of molding followed by thermo-forming**
Verfahren zur Herstellung eines Verkleidungsteils mittels Formung gefolgt von Thermoformung
Procédé pour la fabrication d'une pièce de garniture par des moyens de moulage suivis de thermoformage

(30) Priority: 04.12.2013 FR 1362097
(43) Date of publication of application: 10.06.2015
(73) Proprietor: Reydel Automotive B.V., 3743 KN Baarn (NL)
(72) Inventor: Hochart, Olivier, 62980 Noyelles les Vermelles (FR); Saelen, Marc, 59251 Allennes les Marais (FR); Ngo, Tu Le, 59790 Ronchin (FR); Goislard, Thierry, 59480 Illies (FR); Fevrier, Jacques, 59112 Annoeullin (FR)
(74) Representative: Dummett Copp LLP

(56) References cited:
- WO-A2-2008/011068
- DE-A1- 3 108 571
- FR-A1- 2 955 287
- GB-A- 2 334 475
- DATABASE WPI Week 198923 Thomson Scientific, London, GB; AN 1989-169216 XP002735433, -& JP H01 110121 A (SHIGERU KOGYO KK) 26 April 1989 (1989-04-26)

## Description

### BACKGROUND

### a. Field of the Invention

This invention falls within the scope of decorative elements for vehicle interiors, of the automobile type, and concerns a particular manufacturing process.

### b. Related Art

Processes for the fabrication of decorative elements do exist that combine the injection of a porous substrate and the subsequent thermo-forming of a skin on said substrate. Such processes consist in fabricating a substrate through injection of plastic material in a mold. This substrate is then placed in a complementary shape mold. A synthetic film is then thermo-formed on the substrate, which for this purpose presents sufficient porosity as to allow air to be aspirated through it in such a way that a sheet then will couple with the form of the substrate.

The substrate is therefore intended to form the mechanical structure upon which the decorative skin is subsequently placed. The final element that is obtained is therefore formed by a support structure that is formed by the substrate, upon which the skin is thermo-formed, with the latter giving the appearance of the final element.

In applications in the field of automobiles, it can be necessary to adjust the appearance of the final piece so as to correspond to the various ranges of vehicles that are possible. It can also be necessary that the decorative element present wood inserts, markings or particular three-dimensional effects, etc.

With the objective of reducing the costs associated with these decorative variations, it is therefore desirable to make the production tools as versatile as possible, ideally able to fabricate each version without additional cost, and with an optimum quality level.

The goal of this invention is to achieve all or part of these objectives, and thus essentially proposes to fabricate a decorative element with a process based upon a combination of injection and thermo-forming, with the positioning, prior to the thermo-forming stage, of an insert on the surface of the mold against which the skin is aspirated.

Prior art document JP H01 110121 A discloses a manufacturing process for a cover material in which a decorative element is bonded to a resin sheet that is supported by a base plate. The decorative element is placed on a surface of a female mold and the cover sheet is then heated and softened and pressed into contact with the female mold surface and the decorative element by a male mold on which the base plate has previously been formed, while at the same time a vacuum is applied through the female mold. The base plate and sheet are thus joined together and then released from the molds with the decorative element being bonded in a surface of the sheet.

Prior art document FR 2955827 A1 discloses a manufacturing process for a cover material in which a decorative element is bonded to a sheet that is supported by a rigid insert. The insert is placed on a surface of a male mold and the decorative element is placed on a surface of a female mold. The cover sheet is then heated and softened and pressed into contact with the female mold surface and decorative element by the male mold and rigid insert, while at the same time a vacuum is applied through the female mold. The rigid insert and sheet are thus joined together and then released from the molds with the decorative element being bonded in a surface of the sheet.

Prior art document DE 3108571 A1 discloses a manufacturing process for a cover material in which a decorative sheet is bonded to a rear carrier. The carrier is air-permeable and is initially placed on one mold. The carrier has a sub-region on which a foam padding is applied. A decorative sheet extends over the carrier including the applied foam and is vacuum formed to the carrier by vacuum pressure that is applied only outside the sub-region, this vacuum being applied through holes in the mold and through the air-permeable material of the carrier. A second mold then embosses the decorative sheet over the foam padding. The carrier and decorative sheet are thus joined together with the foam padding in the sub-region of the carrier and then released from the molds.

Prior art document GB 2334475 A discloses a manufacturing process for a cover material in which a relatively soft outer sheet is bonded to a more rigid base member. The base member is placed on a surface of a lower male mold which has holes through which vacuum pressure can be applied, the base member also having holes for communicating this vacuum to grooves on an outer profiled surface of the base member. The sheet is then placed over the lower mold and pressed to the lower mold by an upper female mold while at the same time vacuum is applied through the holes and grooves to vacuum form the sheet to the base member. The base member and sheet are thus joined together and then released from the molds with the soft outer sheet being bonded to the profiled surface of the base member.

Prior art document WO 2008/011068 A2 discloses a manufacturing process for a cover material in which an outer surface has a recessed pattern formed by a removable insert. The insert is placed against one mold half and pressed into the outer surface when the mold halves are pressed together. When the mold halves are opened, the insert is removed to reveal the recessed pattern.

### SUMMARY OF THE INVENTION

According to the invention, there is provided a process of manufacturing a decorative element or trim for automobiles, comprising the steps of manufacturing a substrate comprising vents for the passage of air, opening a forming mold, depositing said substrate against a first part of the forming mold, placing of a sheet in the open forming mold between the substrate and a second part of the mold, closing the forming mold, and aspirating the air from the forming mold such that a rearward side of the sheet comes to mold with the form of the substrate, wherein the process comprises the additional step, implemented prior to the closing of the forming mold, of placing a flat multilayered insert against a surface of the second part of the mold, in such a manner that once the forming mold is closed, one part of a forward side of the sheet comes to mold with the form of said insert and around said insert another part of the forward side of the sheet comes to mold with the form of the second part of the mold, and the insert, on a rearward side of the insert, presents towards the sheet a layer of adhesive that is intended to come into contact with the sheet for a retention of the insert against its surface and characterized in that the layer of adhesive on said rearward side does not cover the whole surface of the insert on said rearward side.

This process is characterized by the fact that it comprises an additional stage, implemented prior to closing the forming mold and basically consisting of placing a flat multi-layer insert against the surface of the second part of the mold, in such a way that the sheet comes to couple with the form of the insert once the forming mold is closed.

It is thus possible to produce multiple different pieces with the same tooling, by placing an insert, if necessary, against the mold, with said insert being able to be foreseen in different locations and presenting itself in multiple versions. The same mold can also be used without any insert so as to form a piece having a basic appearance, with the surface of the mold therefore preferably being continuous in said location.

### BRIEF DESCRIPTION OF THE DRAWINGS

The invention will be better understood, thanks to the following description, which relates to a preferred embodiment, which is provided as a non-limiting example, and explained making reference to the appended schematic drawings, in which:
Figure 1 shows a possible sequence of the process, with two alternative options for the final steps or stages;

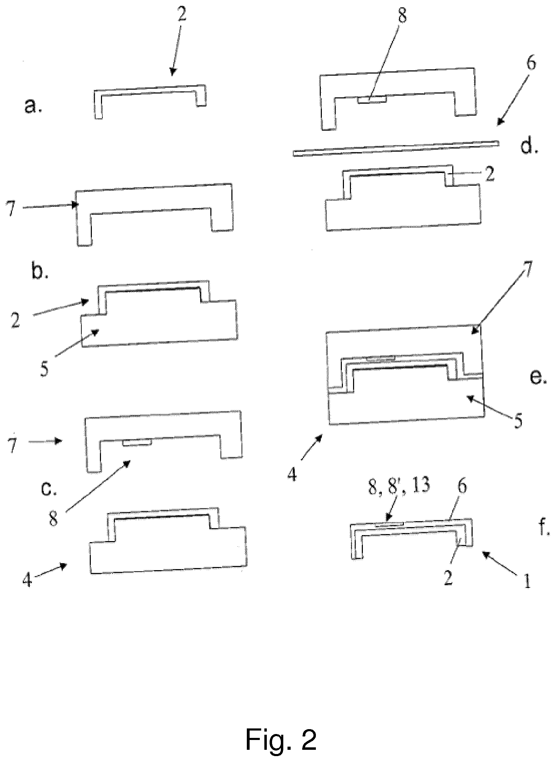

Figure 2 shows, from a through f, the various corresponding states for the thermo-forming mold;

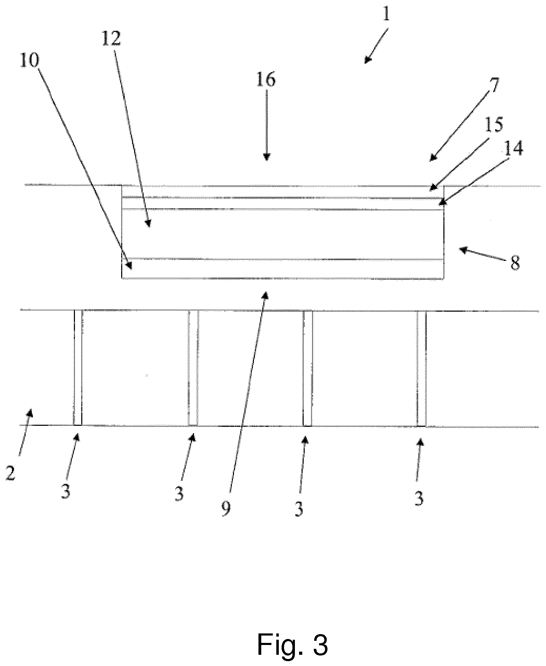

Figure 3 shows a section of the finished piece;
Figure 4 shows a first possible embodiment of the insert, and
Figure 5 shows a second possible embodiment of the insert.

### DETAILED DESCRIPTION

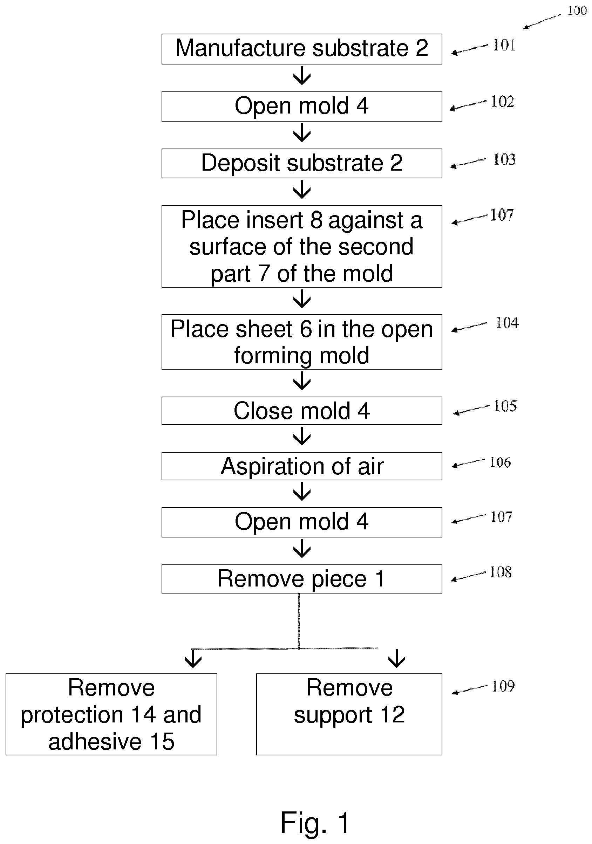

As represented in a synoptic manner on Figure 1, the purpose of the invention is thus a process of manufacturing 100 a decorative element 1 or trim for an automobile, essentially comprising the steps of manufacturing 101 a substrate 2 comprising vents 3 for the passage of air, opening 102 of a forming mold 4, depositing 103 of said substrate 2 against a first part 5 of the forming mold 4, placing or bringing 104 a sheet 6 in the open forming mold 4 between the substrate 2 and a second part 7 of the mold, closing 105 of the forming mold 4, and allowing the aspiration 106 of the air from the forming mold 4, in such a manner as to plate the sheet 6, on the one hand, against the forming mold 4 at the second part 7 of the mold, and, on the other hand, against the substrate 2.

The substrate 2 can be obtained by means of polymer injection, or even by thermocompression or analogous procedures for a thermo-plastic or thermo-setting resin composite. The substrate 2 therefore presents vents 3 whose purpose is to allow for circulation of air through the substrate during the thermo-forming stage during which the sheet 6 is plated against the substrate 2 by means of aspiration. The process therefore requires injection or compression equipment, at least for the production of this substrate 2. This first equipment, which is of the injection molding type, is different from the one in which sheet 6 is subsequently plated against the substrate 2; the latter is therefore removed from a mold initially used to form the substrate 2 and then placed in the forming mold 4.

The forming mold 4 can be opened and therefore basically presents two parts which can be separated one from the other, which is to say a first part 5 and a second part 7, of which at least one is movable. The forming mold 4, at the first part 5, presents a stamp whose geometry is complementary to that of the substrate 2, and which therefore corresponds at least in part with the shape of either the injection mold or of any other manufacturing tooling of the substrate 2. It is against this stamp that the substrate 2 is deposited 103. Following the opening 102 of the forming mold 4, the substrate 2 is therefore deposited against the first part 5, in a complementary shape stamp.

It is in the forming mold 4 that the sheet 6 will ultimately be plated against the substrate 2, by means of aspiration of the air. The sheet 6 is previously heated, so as to increase its suppleness. It is subsequently inserted 104 into the forming mold 4, between the first part 5 where the substrate 2 is to be found, and the second part 7 of the forming mold 4, which is normally found face-to-face with the first part 5. At this stage, the sheet 6 is therefore separated by a distance, on the one hand, from the substrate 2, and, on the other hand, from the second part 7 of the forming mold 4. The sheet 6 is preferably maintained between the two parts of the forming mold 4 thanks to an external support structure. The forming mold 4 is subsequently closed 105.

Once the forming mold 4 is closed 105, the sheet 6 will be secured against the substrate 2, by means of aspiration 106 of air through the first part 5 of the forming mold 4 and the substrate 2 itself. The sheet 6, thanks to its suppleness, which is conferred through its temperature, therefore molds to the form of the substrate 2, while at the same time also molding, on the other side, to the shape of the stamp that has been laid out in the second part 7 of the forming mold 4.

According to the invention, the process comprises an additional step, implemented prior to the closing 105 of the forming mold 4 and basically consisting of placing 107 a flat multilayer insert 8 against the surface of the second part 7 of the mold, in such a manner that a first part of a forward side of the sheet 6 comes to mold to the form of the insert once the forming mold 4 is closed. This first part of the forward side of the sheet 6 is pressed into contact with a rearwards side of the insert as the two mold halves are pressed together.

Prior to the closing 105 of the forming mold 4, the insert 8 is therefore held against or plated against the impression or stamp that is borne by the second part 7 of the forming mold 4 and which defines the contours of the sheet 6 when the latter is closed. When the two parts of the forming mold 4 are pressed one against the other, the insert 8 is embedded or partially encased in the sheet 6, inasmuch as the latter, due to its suppleness brought about by its temperature, molds perfectly with the shape of the insert 8 where the insert extends away from the second part of the mold, against which a forwards side of the insert is preferably held securely in contact, such that the sheet does not flow around the forwards side of the insert.

One thereby obtains a partial encapsulation or a close setting of the insert 8 in the surrounding or enveloping area of sheet 6 (a depression formed in the sheet 6). The sheet 6 can cover the whole substrate 2. The insert covers only a part of the second part of the mold, so that the forward side of the sheet takes the form of both the insert and the adjacent or surrounding stamp or imprint of the second mold part. Preferably, the insert is surrounded by areas of the second mold part; however, one or more edges of the insert may abut against one or more corresponding edges of the second mold part, where these come up against the first mold part.

In certain embodiments, the insert 8 presents a layer of thermo-activated glue so as to cause the joining between itself and the sheet 6.

The second part 7 of the forming mold 4 presents the impression or stamp that allows for the final piece 1 of trim to be given the surface that will normally be visible (exposed side). Indeed, the sheet 6 is preferably in polymer material, of the non-vulcanized thermo-plastic olefin elastomer (TPO) type, used for its feel that is softer than that of the plastic material initially injected 101 to form the substrate 2. On the final piece 1, it is thus the sheet 6 (which forms a skin) instead of the substrate 2 that faces the user. The second part 7 of the forming mold 4 therefore gives the shape to the sheet 6 that is ultimately visible by the user. The insert 8, placed against the surface of the stamp that is borne by the second part 7, therefore finds itself, once piece 1 is installed, on the side that is visible by the user (exposed side).

The retention of the insert 8 in the sheet 6 can be achieved in various manners. Preferably, the insert 8, on the rearward side 9, presents, on the sheet 6 side, a layer of adhesive 10 on the back that is intended to come into contact with the sheet 6 for a retention of the insert 8 against its surface. The insert 8 indeed presents a back side 9, which comes against the sheet 6 during manufacturing, as well as, on the opposite side, a front side 16, which is normally visible after manufacturing and therefore comes against the second part 7 of the forming mold 4. The layer of adhesive 10 on the back then allows, by adhesion, to favor the attachment of the insert 8 in and against the sheet 6.

The insert 8 is normally placed in the forming mold 4 by a robotic type manipulator, which is in contact with the insert 8 on its rear side 9, inasmuch as the insert 8 must be placed in the forming mold 4 with its forward side 16 in contact with the impression or stamp borne by the second part 7 of the forming mold 4. The insert 8 is therefore placed on the robotic manipulator on its rear side 9, and the presence of a layer of adhesive 10 on the rear can therefore impede the detachment of the insert 8 and its transfer from the robotic manipulator to the corresponding surface of the forming mold 4. So as not to be impeded in this operation, two solutions are proposed and explained here below, which is to say, on the one hand, the provision of reserved areas in which the rear side 9 does not present any adhesive, and, on the other hand, recourse to a thermo-activated adhesive and which therefore becomes particularly adhesive during the forming in the forming mold 4.

Thus, the layer of adhesive 10 on the rear may be made up of a thermo-activated material, which is to say of a material that becomes particularly adhesive in the thermal operating conditions of the forming mold 4. This could be a matter of activation of the adhesive with the heat of the sheet 6, which has been previously heated, or instead with the heat that the forming mold 4 presents, following the repeated previous manufacturing processes, or taking into account a specific means of heating of said mold. Once heated, the thermo-activated material becomes particularly adhesive, and the bonds that are required for the definitive setting of the insert 8 in the sheet 6 are created.

In embodiments of the invention, the layer of adhesive 10 on the rear does not cover the whole surface of the insert 8. The robotic manipulator can therefore grasp the insert 8 in its non-adhesive areas. These non-adhesive parts can be in the form of non-adhesive bumpers 11 applied on a layer of adhesive 10 on the rear, or alternatively in the form of reserved areas, which are obtained in the layer of adhesive 10 on the rear during the application of the adhesive on the insert 8.

According to an additional characteristic, the insert 8 presents a support layer 12, intended to give its appearance to the insert 8, preferably in polycarbonate. This support layer 12 also gives the mechanical resistance to the insert 8 and allows tolerance of the other layers described elsewhere. Furthermore, in certain applications, this support layer 12 remains in the final piece 1 of trim to be visible to the user once the trim 1 is in service. The support 12 also gives the insert 8 its appearance while remaining in the trim 1. Its feel, its color, its texture and its appearance are therefore particularly important.

In certain embodiments, the insert 8 is left in the piece 1 of the trim following manufacturing and therefore plays a role in appearance. Therefore, in particular embodiments, the support layer 12 is at least decorated on one side, possibly by means of screen printing. The support layer 12 may also be decorated on both sides. It is possible to foresee a transparent material in such a way that a decoration that is located on the rear side 9 is visible even after manufacturing. The decoration can also be foreseen on the front side 16.

In other embodiments, the process comprises a stage that, after having opened 107 the forming mold 4 and removed 108 the decorative element 1 from the forming mold 4, basically consists in removing 109 the support layer 12 from the decorative element 1. Thereby, in essence, the insert 8 is removed from the decorative element 1 following manufacturing, and can therefore be used to deposit paint on the sheet 6 in the depth of the depression 8' created by the insert 8 in the sheet 6.

According to a possible additional characteristic, the support layer 12, which is preferably translucent or transparent, is decorated by means of a paint 13, applied between the support layer 12 and the adhesive layer 10 on the back 9.

Preferably, the support layer 12, the paint 13 and the rear adhesive 10 are such that the paint 13 remains united with the layer of adhesive 10 on the rear in the event of separation between the support layer 12 and the layer of adhesive 10 on the rear. It is thereby possible to use the support 12 so as to deposit the paint 13 on it, to then remove it so as to only leave the paint 13 against the corresponding surface of the sheet 6. This can in particular be achieved through the use of a paint 13 that presents a lesser surface tension with the support layer 12 than with the adhesive layer 10 on the rear. The paint 13 therefore remains against the sheet 6 and not against the support layer 12 once the latter is removed from the piece of trim 1.

Taking into account the temperatures that are used during implementation, while also taking into account the risks that the insert 8 might be degraded by rubbing or any other contact, it might be necessary to protect the part of insert 8 that will ultimately be visible once the trim 1 is installed.

It can then be useful to foresee a protective layer on the front side 16. This protection layer 14, preferably in the form of a protective film, may then be easily removed from the insert 8. Thus, in these embodiments, the insert 8, on the front side 16, on the forming mold 4 side, presents a protective layer 14 and a adhesive layer 15 on the front with the adhesive layer 15 on the front being intended to come into contact with the surface of the forming mold 4 in line with the second part 7 of the forming mold 4.

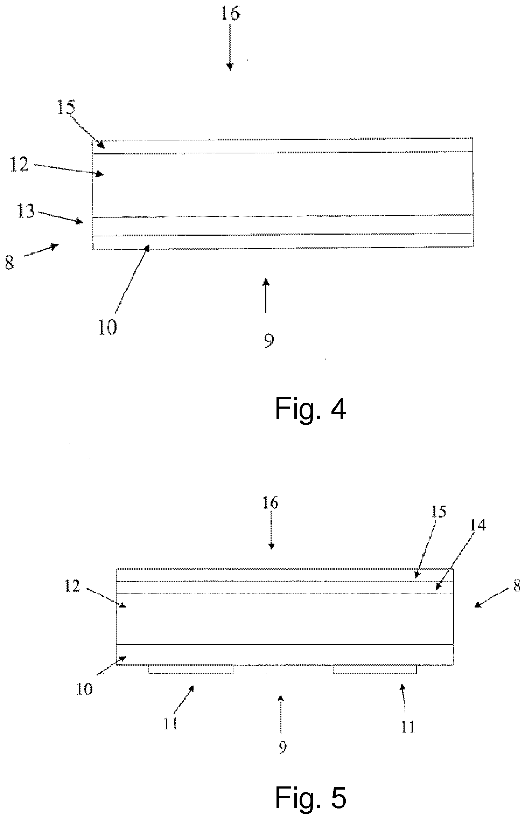

The adhesive 15 on the front allows the insert 8 to become unitary and better stabilized against the second part 7 of the forming mold 4 and to thus ensure the position that it will have in the final piece of the trim 1. Of course, this adhesive layer 15 on the front may also be implemented without any protective layer 14 (direct application on the support layer 12 - Figure 4). The joint use of these two layers 14 and 15 nonetheless allows for the easy removal of the adhesive matter that is formed by the adhesive layer 15 on the front. Indeed, it is solely necessary to remove the protective layer 14 that is to be found between the support layer 12 and the adhesive layer 15 on the front, something that can easily be done by a recurring movement to peal the protective layer 14. Thereby, in these embodiments, the process comprises a stage that basically consists, after having opened 107 the forming mold 4 and removed 108 the decorative element 1 from the forming mold 4, of removing 109 the protective layer 14 and the adhesive layer 15 on the front from the decorative element 1. The trim piece 1 that is obtained therefore presents the appearance that is conferred by the support layer 12 at the height of the insert 8.

According to an advantageous embodiment, the insert 8 comprises or is constituted by a succession of super-imposed or stratified layers, which is to say an adhesive layer 10 on the back, a support layer 12, a film or protective layer 14, and an adhesive layer 15 on the front, or even a layer of paint 13, set between the support layer 12 and the adhesive layer 10 on the rear.

From this process, one understands that the decorative element or trim 1 that is ultimately obtained may present various appearances according to the make-up of the insert 8 that is employed in the mold 4 and of the removal of all or part of the constituent layers of the insert 8, following the opening of the forming mold 4 at the end of the cycle.

Thus, the area of the sheet 6 that has received the insert 8: may definitively present itself in the form of a depression or reinforcement 8' of the sheet or skin 6, whose base is covered, or not, by a layer of paint 13; may definitively integrate at least a part of the insert 8, which is to say the support layer 12, with possibly an underlying decoration layer 13.

The invention also relates to a decorative element or trim 1 for automobiles that presents at least certain, preferably all, of the construction and structural characteristics which have been touched upon here above.

Of course, the invention is not limited to the embodiment described and represented in the appended drawings. Modifications are possible, in particular from the point of view of the make-up of the various elements, by means of a different combination of all or part of the characteristics described here above, or by substitution of technical equivalents, without nonetheless departing from the scope of protection of the invention as defined by the following Claims.

## Claims

1. A process of manufacturing (100) a decorative element (1) or trim for automobiles, comprising the steps of manufacturing (101) a substrate (2) comprising vents (3) for the passage of air, opening (102) a forming mold (4), depositing (103) said substrate (2) against a first part (5) of the forming mold (4), placing (104) of a sheet (6) in the open forming mold (4) between the substrate (2) and a second part (7) of the mold, closing (105) the forming mold (4), and aspirating (106) the air from the forming mold (4) such that a rearward side of the sheet comes to mold with the form of the substrate, wherein the process comprises the additional step, implemented prior to the closing (105) of the forming mold (4), of placing (107) a flat multilayered insert (8) against a surface of the second part (7) of the mold, in such a manner that once the forming mold (4) is closed, one part of a forward side of the sheet (6) comes to mold with the form of said insert and around said insert another part of the forward side of the sheet comes to mold with the form of the second part of the mold, and the insert (8), on a rearward side (9) of the insert, presents towards the sheet (6) a layer of adhesive (10) that is intended to come into contact with the sheet (6) for a retention of the insert (8) against its surface and **characterized in that** the layer of adhesive (10) on said rearward side does not cover the whole surface of the insert (8) on said rearward side.

2. A process according to Claim 1, in which the layer of adhesive (10) on said rearward side does not cover reserved areas on said rear side (9) of the insert whereby the layer of adhesive (10) on said rearward side does not cover the whole surface of the insert (8).

3. A process according to Claim 1, in which the insert further comprises non-adhesive bumpers that are applied on said layer of adhesive (10), whereby the layer of adhesive (10) on said rearward side does not cover the whole surface of the insert (8).

4. A process according to any one of Claims 1 to 3, in which the layer of adhesive (10) on said rearward side is made up of a thermo-activated material, which is to say, of a material that becomes particularly adhesive in the thermal operating conditions of the forming mold (4).

5. A process according to any one of Claims 1 through 4, in which the insert (8) presents a support layer (12), intended to give its appearance to the insert (8).

6. A process according to Claim 5, in which the support layer (12) is decorated on at least one side, possibly by screen printing.

7. A process according to Claim 4 and according to Claim 6, in which the support layer (12) is decorated by means of a paint (13), applied between the support layer (12) and the adhesive layer (10) on said rearward side, the support layer (12), the paint (13) and the adhesive (10) on said rearward side are such that the paint (13) remains unitary with the layer of adhesive (10) on the rear in the event of separation between the support layer (12) and the layer of adhesive (10) on said rearward side.

8. A process according to Claim 7, in which after having opened (107) the forming mold (4) and removed (108) the decorative element (1) from the forming mold (4), it basically consists in removing (109) the support layer (12) from the decorative element (1).

9. A process according to any one of Claims 1 through 8, in which the insert (8), on the front side (16), on the forming side (4), presents a protective layer (14) and an adhesive layer (15) on the front.

10. A process according to Claim 9, in which after having opened (107) the forming mold (4) and removed (108) the decorative element (1) from the forming mold (4), in the process comprises removing (109) the protective layer (14) and the adhesive layer (15) on the front from the decorative element (1).

11. A process according to any one of Claims 1 through 10, in which the insert (8) comprises a succession of superimposed or stratified layers, said layers comprising one adhesive layer (10) on the back, a support layer (12), a film or protective layer (14), and an adhesive layer (15) on the front, and optionally a layer of paint (13), set between the support layer (12) and the adhesive layer (10) on said rearward side.

12. A process according to any one of Claims 1 through 11, in which the air is aspirated (106) from the forming mold in such a manner as to plate the sheet (6), on the one hand, against the forming mold (4) at the second part (7) of the mold, and, on the other hand, against the substrate (2).

13. A process according to any one of Claims 1 through 12, in which the forming mold (4), at the first part (5), presents a stamp whose geometry is complementary to that of the substrate (2), and which therefore corresponds at least in part with the shape the substrate.

14. A process according to Claim 13, in which said insert (8) does not cover the full extent of said stamp when said insert is placed against said surface of the second part (7) of the mold.

15. A process according to any one of Claims 1 through 14, in which the sheet (6) comes to mold with the form of said insert (8) to provide an encapsulation or a close setting of the insert in an enveloping depression in a surface area of the sheet.

## Patentansprüche

1. Prozess zum Herstellen (100) eines dekorativen Elements (1) oder eines Verkleidungsteils für Kraftfahrzeuge, umfassend die Schritte des Herstellens (101) eines Substrats (2) umfassend Luftöffnungen (3) für das Hindurchtreten von Luft, Öffnens (102) eines Umformwerkzeugs (4), Abscheidens (103) des Substrats (2) gegen einen ersten Teil (5) des Umformwerkzeugs (4), Platzierens (104) einer Folie (6) in dem offenen Umformwerkzeug (4) zwischen dem Substrat (2) und einem zweiten Teil (7) des Werkzeugs, Schließens (105) des Umformwerkzeugs (4) und Ansaugens (106) der Luft von dem Umformwerkzeug (4), so dass eine Rückseite der Folie zum Ausformen mit der Form des Substrats kommt, wobei der Prozess den vor dem Schließen (105) des Umformwerkzeugs (4) implementierten zusätzlichen Schritt umfasst des Platzierens (107) einer flachen mehrschichtigen Einlage (8) gegen eine Oberfläche des zweiten Teils (7) des Werkzeugs auf derartige Weise, dass, nachdem das Umformwerkzeug (4) geschlossen ist, ein Teil einer Vorderseite der Folie (6) zum Ausformen mit der Form der Einlage und um die Einlage ein weiterer Teil der Vorderseite der Folie zum Ausformen mit der Form des zweiten Teils des Werkzeugs kommt und die Einlage (8) auf einer Rückseite (9) der Einlage zur Folie (6) eine Schicht aus Kleber (10) präsentiert, die mit der Folie (6) in Kontakt kommen soll zum Halten der Einlage (8) gegen ihre Oberfläche und **dadurch gekennzeichnet, dass** die Schicht aus Kleber (10) auf der Rückseite nicht die ganze Oberfläche der Einlage (8) auf der Rückseite bedeckt.

2. Prozess nach Anspruch 1, bei dem die Schicht aus Kleber (10) auf der Rückseite reservierte Bereiche auf der Rückseite (9) der Einlage nicht bedeckt, wodurch die Schicht aus Kleber (10) auf der Rückseite nicht die ganze Oberfläche der Einlage (8) bedeckt.

3. Prozess nach Anspruch 1, bei dem die Einlage weiterhin nichtklebende Höcker umfasst, die auf der Schicht aus Kleber (10) aufgetragen sind, wodurch die Schicht aus Kleber (10) auf der Rückseite nicht die ganze Oberfläche der Einlage (8) bedeckt.

4. Prozess nach einem der Ansprüche 1 bis 3, bei dem die Schicht aus Kleber (10) auf der Rückseite aus einem thermisch aktivierten Material besteht, das heißt einem Material, das in den thermischen Arbeitsbedingungen des Umformwerkzeugs (4) besonders adhäsiv wird.

5. Prozess nach einem der Ansprüche 1 bis 4, bei dem die Einlage (8) eine Stützschicht (12) präsentiert, die ihr Aussehen der Einlage (8) geben soll.

6. Prozess nach Anspruch 5, bei dem die Stützschicht (12) auf mindestens einer Seite, möglicherweise durch Siebdruck, dekoriert wird.

7. Prozess nach Anspruch 4 und 6, bei dem die Stützschicht (12) mit Hilfe eines Lacks (13), zwischen der Stützschicht (12) und der Klebstoffschicht (10) auf der Rückseite aufgebracht, dekoriert wird, wobei die Stützschicht (12), der Lack (13) und der Kleber (10) auf der Rückseite derart sind, dass der Lack (13) mit der Schicht aus Kleber (10) auf der Rückseite im Fall der Trennung zwischen der Stützschicht (12) und der Schicht aus Kleber (10) auf der Rückseite unitär bleibt.

8. Prozess nach Anspruch 7, bei dem nach dem Öffnen (107) des Umformwerkzeugs (4) und Entfernen (108) des dekorativen Elements (1) von dem Umformwerkzeug (4) er im Wesentlichen aus dem Entfernen (109) der Stützschicht (12) von dem dekorativen Element (1) besteht.

9. Prozess nach einem der Ansprüche 1 bis 8, bei dem die Einlage (8) auf der Vorderseite (16) auf der Umformseite (4) eine Schutzschicht (14) und eine Klebstoffschicht (15) auf der Vorderseite präsentiert.

10. Prozess nach Anspruch 9, bei dem nach dem Öffnen (107) des Umformwerkzeugs (4) und Entfernen (108) des dekorativen Elements (1) von dem Umformwerkzeug (4) in dem Prozess das Entfernen (109) der Schutzschicht (14) und der Klebstoffschicht (15) auf der Vorderseite von dem dekorativen Element (1) umfasst.

11. Prozess nach einem der Ansprüche 1 bis 10, bei dem die Einlage (8) eine Folge von überlagerten oder geschichteten Schichten umfasst, wobei die Schichten eine Klebstoffschicht (10) auf der Rückseite, eine Stützschicht (12), eine Film- oder Schutzschicht (14) und eine Klebstoffschicht (15) auf der Vorderseite und optional eine Schicht aus Lack (13), eingestellt zwischen der Stützschicht (12) und der Klebstoffschicht (10) auf der Rückseite, umfasst.

12. Prozess nach einem der Ansprüche 1 bis 11, bei dem die Luft derart von dem Umformwerkzeug angesaugt wird (106), dass die Folie (6) einerseits gegen das Umformwerkzeug (4) am zweiten Teil (7) des Werkzeugs und andererseits gegen das Substrat (2) plattiert wird.

13. Prozess nach einem der Ansprüche 1 bis 12, bei dem das Umformwerkzeug (4) am ersten Teil (5) einen Stempel präsentiert, dessen Geometrie komplementär zu der des Substrats (2) ist und der deshalb zumindest teilweise der Gestalt des Substrats entspricht.

14. Prozess nach Anspruch 13, bei dem die Einlage (8) das volle Ausmaß des Stempels nicht bedeckt, wenn die Einlage gegen die Oberfläche des zweiten Teils (7) des Werkzeugs platziert wird.

15. Prozess nach einem der Ansprüche 1 bis 14, bei dem die Folie (6) zum Ausformen mit der Form der Einlage (8) kommt, um eine Kapselung oder eine enge Einstellung des Einsatzes in einer einhüllenden Vertiefung in einem Oberflächenbereich der Folie bereitzustellen.

## Revendications

1. Procédé de fabrication (100) d'un élément décoratif (1) ou d'une garniture pour automobiles, qui comprend les étapes qui consistent à fabriquer (101) un substrat (2) qui comprend des évents (3) destinés au passage de l'air, à ouvrir (102) un moule de formage (4), à déposer (103) ledit substrat (2) contre une première partie (5) du moule de formage (4), à placer (104) une feuille (6) dans le moule de formage ouvert (4) entre le substrat (2) et une seconde partie (7) du moule, à fermer (105) le moule de formage (4), et à aspirer (106) l'air à partir du moule de formage (4) de sorte qu'un côté arrière de la feuille soit moulé avec la forme du substrat, le procédé comprenant l'étape supplémentaire, exécutée avant la fermeture (105) du moule de formage (4), qui consiste à placer (107) un insert multicouches plat (8) contre une surface de la seconde partie (7) du moule, de sorte que, dès que le moule de formage (4) est fermé, une partie d'un côté avant de la feuille (6) soit moulée avec la forme dudit insert et, autour dudit insert, une autre partie du côté avant de la feuille soit moulée avec la forme de la seconde partie du moule, et que l'insert (8), sur un côté arrière (9) de l'insert, présente vers la feuille (6) une couche d'adhésif (10) qui est destinée à venir en contact avec la feuille (6) de façon à retenir l'insert (8) contre sa surface, et **caractérisé en ce que** la couche d'adhésif (10) située sur ledit côté arrière ne recouvre pas la surface totale de l'insert (8) sur ledit côté arrière.

2. Procédé selon la revendication 1, dans lequel la couche d'adhésif (10) située sur ledit côté arrière ne recouvre pas des zones réservées sur ledit côté arrière (9) de l'insert, moyennant quoi la couche d'adhésif (10) située sur ledit côté arrière ne recouvre pas la surface totale de l'insert (8).

3. Procédé selon la revendication 1, dans lequel l'insert comprend en outre des intercalaires non adhésifs qui sont appliqués sur ladite couche d'adhésif (10), moyennant quoi la couche d'adhésif (10) située sur ledit côté arrière ne recouvre pas la surface totale de l'insert (8).

4. Procédé selon l'une quelconque des revendications 1 à 3, dans lequel la couche d'adhésif (10) située sur ledit côté arrière est composée d'un matériau thermoactif, c'est-à-dire d'un matériau qui devient particulièrement adhésif dans les conditions thermiques de fonctionnement du moule de formage (4).

5. Procédé selon l'une quelconque des revendications 1 à 4, dans lequel l'insert (8) présente une couche de support (12), destinée à offrir son apparence à l'insert (8).

6. Procédé selon la revendication 5, dans lequel la couche de support (12) est décorée sur au moins un côté, éventuellement par sérigraphie.

7. Procédé selon les revendications 4 et 6, dans lequel la couche de support (12) est décorée à l'aide d'une peinture (13), appliquée entre la couche de support (12) et la couche d'adhésif (10) sur ledit côté arrière, la couche de support (12), la peinture (13) et l'adhésif (10) sur ledit côté arrière étant tels que la peinture (13) reste unitaire avec la couche d'adhésif (10) sur l'arrière en cas de séparation entre la couche de support (12) et la couche d'adhésif (10) sur ledit côté arrière.

8. Procédé selon la revendication 7, dans lequel, après avoir ouvert (107) le moule de formage (4) et retiré (108) l'élément décoratif (1) du moule de formage (4), la couche de support (12) est en fait retirée (109) de l'élément décoratif (1).

9. Procédé selon l'une quelconque des revendications 1 à 8, dans lequel l'insert (8), sur le côté avant (16), côté formage (4), présente une couche de protection (14) et une couche d'adhésif (15) sur le devant.

10. Procédé selon la revendication 9, dans lequel, après avoir ouvert (107) le moule de formage (4) et retiré (108) l'élément décoratif (1) du moule de formage (4), la couche de protection (14) et la couche d'adhésif (15) sur le devant sont retirées (109) de l'élément décoratif (1).

11. Procédé selon l'une quelconque des revendications 1 à 10, dans lequel l'insert (8) comprend une succession de couches superposées ou stratifiées, lesdites couches comprenant une couche d'adhésif (10) sur l'arrière, une couche de support (12), un film ou une couche de protection (14), et une couche d'adhésif (15) sur le devant, et éventuellement une couche de peinture (13), placée entre la couche de support (12) et la couche d'adhésif (10) sur ledit côté arrière.

12. Procédé selon l'une quelconque des revendications 1 à 11, dans lequel l'air est aspiré (106) à partir du moule de formage de façon à plaquer la feuille (6), d'un côté, contre le moule de formage (4) au niveau de la seconde partie (7) du moule, et, d'un autre côté, contre le substrat (2).

13. Procédé selon l'une quelconque des revendications 1 à 12, dans lequel le moule de formage (4), au niveau de la première partie (5), présente une estampille dont la géométrie est complémentaire à celle du substrat (2), et qui, par conséquent, correspond au moins en partie à la forme du substrat.

14. Procédé selon la revendication 13, dans lequel ledit insert (8) ne recouvre pas la surface totale de ladite estampille lorsque ledit insert est placé contre ladite surface de la seconde partie (7) du moule.

15. Procédé selon l'une quelconque des revendications 1 à 14, dans lequel la feuille (6) est moulée avec la forme dudit insert (8) afin de produire une encapsulation ou un rapprochement de l'insert dans une dépression enveloppante située dans une zone de surface de la feuille.
